# EUROPÄISCHE PATENTSCHRIFT

(11) **EP 0 657 082 B1**
(45) Veröffentlichungstag und Bekanntmachung des Hinweises auf die Patenterteilung: **22.01.1997**
(21) Anmeldenummer: 93919169.8
(22) Anmeldetag: 25.08.1993
(51) Int. Cl.: H04Q 3/545

(54) **CALL-PROCESSING-SYSTEM ZUR STEUERUNG VON VERBINDUNGEN IN EINEM VERMITTLUNGSSYSTEM**
CALL PROCESSING SYSTEM FOR CONTROLLING CONNECTIONS IN A COMMUNICATIONS SYSTEM
SYSTEME DE TRAITEMENT D'APPELS PERMETTANT DE COMMANDER LES LIAISONS DANS UN SYSTEME DE COMMUNICATIONS

(30) Priorität: 25.08.1992 EP 92114476
(43) Veröffentlichungstag der Anmeldung: 14.06.1995
(73) Patentinhaber: SIEMENS AKTIENGESELLSCHAFT, 80333 München (DE); GPT LIMITED, Coventry, CV3 1HJ (GB)
(72) Erfinder: BLAIR, Hamish Michael, Warwickshire CV8 2BX (GB); DENT, Graham Richard, Warwickshire CV8 1JW (GB); CUTLER, John, Wayne, Coventry CV3 1FX (GB); HOOGENDOORN, Cornelis, D-82166 Gräfelfing (DE); SCHIESSL, Heinrich, D-81247 München (DE); SCHESSEL, Larry-Edward, Boca Raton, FL 33487 (US)
(86) Internationale Anmeldenummer: EP9302287
(87) Internationale Veröffentlichungsnummer: WO9405121

(56) Entgegenhaltungen:
- INTERNATIONAL SWITCHING SYMPOSIUM 1990 Bd. 2 , Juni 1990 , STOCKHOLM SE Seiten 97 - 106 E. C. ARNOLD ET AL. 'Object Oriented Software Technologies Applied to Switching System Architectures and Software Development Processes'
- IEEE NETWORK: THE MAGAZINE OF COMPUTER COMMUNICATIONS Bd. 4, Nr. 6 , November 1990 , NEW YORK US Seiten 14 - 22 J. S. STACEY ET AL. 'Modeling Call Control for Distributed Applications in Telephony'
- EUROPEAN TRANSACTIONS ON TELECOMMUNICATIONS AND RELATED TECHNOLOGIES Bd. 2, Nr. 4 , August 1991 , MILANO IT Seiten 391 - 401 G. P. BALBONI ET AL. 'An ATM Switching Testbed'
- PROCEEDINGS OF THE NATIONAL COMMUNICATIONS FORUM Bd. 45 , Oktober 1991 , OAK BROOK, ILLINOIS US Seiten 185 - 193 S. CANNON 'Switch Architecture for the Intelligent Network'

## Beschreibung

Bei der Entwicklung von Vermittlungssystemen ist man bestrebt, möglichst modulare Software-Systeme zur Steuerung des Vermittlungssystems zu entwerfen. Dies geschieht vor allem im Hinblick auf eine bessere Entkopplung der einzelnen Funktionen eines Vermittlungssystems und damit einer einfacheren späteren Veränderbarkeit bzw. besseren Wiederverwendbarkeit der Vermittlungssoftware bei Weiterentwicklungen.

Aus dem Artikel "Object Oriented Software Technologies Applied to Switching Architectures and Software Development Processes" von E. C. Arnold et al. aus dem "International Switching Symposium 1990, Bd. 2, Juni 1990, Stockholm SE, Seiten 97 - 106" ist eine Switching-Application-Software bekannt, die in mehrere Komponenten aufgeteilt ist. Die Komponenten repräsentieren dabei logische und physikalische Systementitäten. Die Komponente "Call" repräsentiert beispielsweise die Systementität "Call". Die Komponente "Call" steuert dabei die Systementität "Call" sowohl auf logischer Ebene als auch auf physikalischer Ebene (mit Ausnahme der lokalen physikalischen Verbindungssteuerung, die durch die lokalen Komponenten des Typs "Fabric" durchgeführt wird).

Der Erfindung liegt die Aufgabe zugrunde, ein modulares Call-Processing-System anzugeben.

Diese Aufgabe wird durch die Merkmale des Anspruchs 1 gelöst.

Das erfindungsgemäße Call-Processing-System beschränkt sich auf die logische Verbindungssteuerung und die Initialisierung von physikalischen Verbindungssteuerungsvorgängen, während das Ressourcen-Control-System die physikalischen Verbindungssteuerungsvorgänge durchführt. Dadurch ist das Call-Processing-System von der physikalischen Verbindungssteuerung unabhängig.

Durch die Aufteilung des Call-Processing-Systems in ein Signalisierungsschnittstellensystem und ein Call-Control-System wird die Unabhängigkeit des Call-Control-Systems von verschiedenen Signalisierungsvarianten gewährleistet.

Durch das Koordinierungssystem wird die Unabhängigkeit zwischen dem Signalisierungsschnittstellensystem und dem Call-Control-System unterstützt, da diese Systeme nun eigenständige, d.h. voneinander unabhängige Verbindungsanforderungen formulieren können.
Im übrigen wird durch das Koordinierungssystem das Ressourcen-Control-System von Koordinierungsaufgaben entbunden. Diese Entbindung bedeutet aber, daß das Ressourcen-Control-System nunmehr keine Kenntnisse von den modularen Abhängigkeiten des Call-Processing-Systems besitzen muß. Damit kann das Ressourcen-Control-System als ein allgemeines Service-System zur Steuerung von Verbindungen auf physikalischer Ebene ausgestaltet werden, das außer dem Call-Processing-System auch anderen Anwendersystemen seinen Service zur Verfügung stellen kann, wie z.B. einem Processing-System zur Systemadministration oder einem Processing-System zur Signalisierungsadministration.

Eine weitere Ausführungsform der Erfindung ist gemäß Anspruch 2 angegeben. Durch diese Ausführungsform wird die Modularisierung des Call-Processing-Systems weiter verfeinert. Die allen Instanzen einer Kette gemeinsame Nachrichtenschnittstelle erlaubt es, neue Feature hinzuzufügen oder bestehende Feature zu ändern, indem einfach eine Feature-Instanz in die Kette eingefügt oder geändert wird, ohne daß dies einen Einfluß auf andere Instanzen der Kette hat.

Eine weitere Ausführungsform der Erfindung ist durch Anspruch 3 angegeben. Bei dieser Ausführungsform hat jede Teilfunktion der logischen Verbindungssteuerung, repräsentiert durch eine Instanz, seine bestimmte Lage innerhalb der Kette. Da nun Anreiznachrichten die Kette zuerst an ihren Enden betreten und dann von Instanz zu Instanz weitergereicht werden, ergibt sich automatisch eine Reihenfolge, nach der die Instanzen einer Kette einen Verbindungssteuerungsvorgang bearbeiten. Durch diese Reihenfolge lösen sich viele Probleme der Feature-Interaktion. Herkömmliche Call-Processing-Systeme müssen jedes Mal, wenn sie eine neue Anreiznachricht empfangen, überprüfen, ob diese Nachricht momentan bestehende Call-Feature beeinflußt, und davon abhängig entsprechend reagieren. Das erfindungsgemäße Call-Processing-System löst dieses Problem durch die Lage einer Feature-Instanz innerhalb der Kette. Jede Instanz der Kette geht somit bei Empfang einer Anreiznachricht von der Annahme aus, daß keine höher priorisierte interagierende Feature-Instanz in der Kette vorhanden ist, und agiert dementsprechend unabhängig von dem Vorhandensein einer solchen Feature-Instanz. Dadurch wird die Unabhängigkeit der transienten Moduln gefördert, ohne daß dadurch die Problematik der Koordination der unabhängigen Verbindungsanforderungen der Instanzen an das Ressourcen-Control-System und damit die Komplexität des Koordinierungssystems zu sehr erhöht würde.

Eine weitere Ausführungsform der Erfindung ist durch Anspruch 4 angegeben. Bei dieser Ausführungsform stellen die statischen Moduln des statischen Systems eine neutrale Schnittstelle zwischen den transienten Moduln des transienten Systems und der semipermanenten Datenbasis dar. Diese neutrale Schnittstelle verbirgt die physikalische Struktur der Datenbasis vor dem transienten System, das den zentralen allgemeinen Teil des Call-Processing-Systems darstellt. Das transiente System braucht dadurch nicht mehr zwischen unterschiedlichen Typen von logischen User-Kennungen (z.B. POTS, CENTREX usw.) oder unterschiedlichen Typen von logischen Access-Kennungen (z.B. analog, N-ISDN, B-ISDN usw.) zu unterscheiden.

Eine weitere Ausführungsform der Erfindung ist durch Anspruch 5 angegeben. Diese Ausführungsform zeigt ein spezielles verteiltes Koordinierungssystem, das durch die Vergabe einer Kontrollmarke unter den Koordinierungsmoduln sicherstellt, daß zu einem bestimmten Zeitpunkt immer nur eine Verbindungsanforderung an das Ressourcen-Control-System von einem bestimmten Call weitergegeben und ausgeführt wird. Dadurch wird gewährleistet, daß das Ressourcen-Control-System für einen bestimmten Call niemals gleichzeitig mehrere Verbindungsanforderungen empfängt bzw. ausführt und somit Abhängigkeiten zwischen Verbindungsanforderungen nicht berücksichtigen muß.

Eine weitere Ausführungsform der Erfindung ist durch Anspruch 6 angegeben. Durch die Einführung des Switching-Control-Systems als einem zentralen physikalischen Teilsystem des Ressourcen-Control-Systems ist bei dieser Ausführungsform der Erfindung gewährleistet, daß das Koordinierungssystem und damit das Call-Processing-System von der Hardware-Architektur der Ressourcen (z.B. Koppeleinrichtungen) vollständig unabhängig ist. Darüber hinaus kann das zentrale physikalische Switching-Control-System auch anderen Anwendersystemen, außer dem Call-Processing-System, als ein universales Service-System zur zentralen Steuerung von Verbindungen auf physikalischer Ebene dienen.

Eine weitere Ausführungsform der Erfindung ist durch Anspruch 7 angegeben. Durch diese Ausführungsform wird die Unabhängigkeit des Switching-Control-Systems vom Call-Processing-System erhöht und dadurch die Verwendbarkeit des Swichting-Control-Systems als allgemeines Service-System für mehrere Anwendersysteme erhöht.

Eine weitere Ausführungsform der Erfindung ist durch Anspruch 8 angegeben. Bei dieser Ausführungsform wird durch die Möglichkeit der Verteilung der Call-Kette über mehrere zentrale Steuerungsprozessoren eine größere Flexibilität der logischen Verbindungssteuerung und damit der logischen Verbindungsstrukturen erreicht. Insbesondere kann dadurch das Signalisierungsschnittstellensystem einen Teil des Call-Processing-Systems bilden, obwohl es auf einem zentralen Steuerungsprozessor jeweils nur einem bestimmten Teil der physikalischen Zugänge zum Vermittlungssystem fest zugeordnet ist.

Eine weitere Ausführungsform der Erfindung ist durch Anspruch 9 angegeben. Durch die zentrale Verwaltung der Ressourcen durch jeweils einen zentralen Steuerungsprozessor ist sichergestellt, daß es angesichts der verteilten logischen Verbindungssteuerung nicht zu einer gleichzeitigen mehrfachen Belegung einer von dem transienten System verwalteten Ressource kommen kann.

Im folgenden wird die Erfindung anhand der Zeichnung näher erläutert.

FIG 1 zeigt die Struktur eines ATM-Vermittlungssystems.

FIG 2 zeigt die modulare Zusammensetzung des Call-Processing-Systems.

FIG 3 zeigt die Sichtweise der Segmente des Connectionsystems und der Koordinierungsmoduln des Koordinierungssystems bezüglich einer Verbindung.

FIG 4 zeigt die Verteilung der Software-Systeme zur Steuerung von Verbindungen auf die Hardware-Systeme.

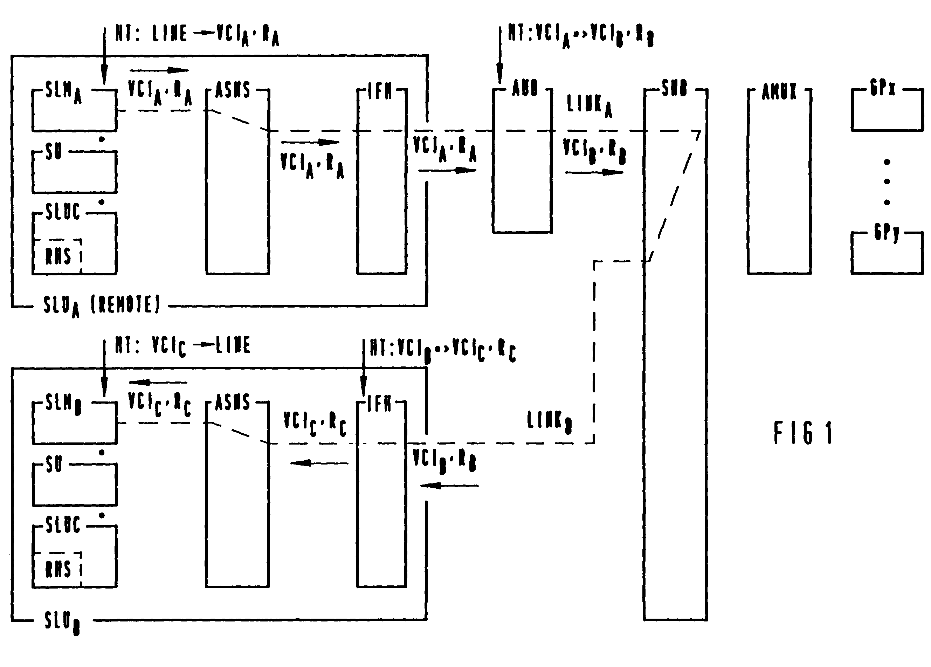

FIG 1 zeigt die Struktur eines ATM-Vermittlungssystems, bei dem die erfindungsgemäße Software-Struktur zur Realisierung der Vermittlungsschicht eingesetzt werden kann.

Die prinzipiellen Switching-Funktionen zum Aufbau von STM- oder ATM-Verbindungen sind vergleichbar. So wird beispielsweise auch für eine ATM-Verbindung ein virtueller Pfad durch die betroffenen Koppeleinrichtungen bestimmt, bevor der tatsächliche Datentransfer beginnt. Alle Zellen einer ATM-Verbindung werden über diesen Pfad übertragen. Im allgemeinen werden sich mehrere Verbindungen einen ATM-Link teilen. ATM-Zellen, die zur selben Verbindung gehören, wird dieselbe VCI/VPI-Kennung (virtual connection/path identifier) im Zellenheader zugeordnet.

Ein ausgewählter Pfad muß für alle Links, die eine Verkehrskonzentration bewirken, in Software-Verzeichnissen reserviert werden, um eine Überlast auf den ATM-Links zu verhindern.

Die Anzahl der Zellen, die in einem bestimmten Zeitintervall übertragen werden, definiert die Bandbreite, die durch eine bestimmte ATM-Verbindung auf einem Link beansprucht wird. Die zugeordnete Bandbreite wird durch eine Benutzer/ Netz-Schnittstelle verbindungsindividuell überwacht, um ein nicht autorisiertes Überfluten der Koppeleinrichtungen durch einen bestimmten Anwender (policing) zu verhindern. Das genannte Software-Verzeichnis wird durch ein Software-Ressourcensystem RHS verwaltet, das in einer Steuereinheit SLUC einer Teilnehmereinheit SLU inplementiert ist.

Die VCI/VPI-Kennung, die einer bestimmten ATM-Verbindung zugeordnet ist und die in FIG 1 mit der Bezeichnung VCI abgekürzt ist, ist immer für einen bestimmten Link gültig. Bevor die ATM-Zellen auf einem anderen Link weiterübertragen werden, wird im Header einer ATM-Zelle eine neue VCI/VPI-Kennung eingetragen (Header-Übersetzung HT). Diese Header-Übersetzung findet ebenfalls an der nicht dargestellten Benutzer/Netz-Schnittstelle statt. Die Header-Übersetzung wird außerdem jeweils vor dem Durchlauf einer Koppeleinrichtung durchgeführt. In diesem Fall wird einer ATM-Zelle gleichzeitig mit dem Eintragen einer neuen VCI/VPI-Kennung eine Routing- Kennung R angefügt, die den festgelegten Pfad durch die folgende Koppeleinrichtung beschreibt. Die Routing-Kennung R wird innerhalb der folgenden Koppeleinrichtung ausgewertet, um die Zelle zu dem richtigen abgehenden Link durchzusteuern. Für einen virtuellen Pfad wird in der Schnittstellenschaltung IFH bzw. in der Zugangseinrichtung AU (bei einer entfernten SLU) nur die VPI-Kennung neu berechnet, während die VCI-Kennung, die einzelnen Verbindungen zugeordnet ist, unverändert bleibt. Alle Zellen mit derselben VPI-Kennung erhalten somit dieselben Routing-Kennungen, wodurch es ermöglicht wird, mehrere virtuelle Verbindungen auf transparente Weise über denselben virtuellen Pfad zu schalten.

In FIG 1 ist die Header-Übersetzung für eine virtuelle ATM-Verbindung über die Hauptkoppeleinrichtung SNB gezeigt. Als virtuelle ATM-Verbindung ist eine Einweg-Verbindung vom einer Teilnehmeranschlußeinheit SLU_{A} zu einer Teilnehmeranschlußeinheit SLU_{B} dargestellt. Im folgenden werden die für eine ATM-Zelle durchgeführten Header-Übersetzungen näher beschrieben.

Die erste Header-Übersetzung HT wird durch das Teilnehmermodul SLM_{A} durchgeführt. In diesem Teilnehmermodul werden die Routing-Kennungen R_{A} für den Pfad durch das lokale Koppelnetz ASNS der Teilnehmereinheit SLU_{A} den ATM-Zellen zugefügt und die VCI_{A}-Kennung wird in den Header der ATM-Zellen eingetragen.

Die zweite Header-Übersetzung für die zentrale Koppeleinrichtung SNB wird durch die Breitbandzugangseinrichtung AUB bewirkt. In dieser Breitbandzugangseinrichtung erhalten alle ankommenden Zellen mit der Pfadkennung VCI_{A} eine neue Pfadkennung VCI_{B} und eine neue Routing-Kennung R_{B} für den Pfad durch die Hauptkoppeleinrichtung SNB.

Die dritte und letzte Header-Übersetzung wird in der Teilnehmereinheit SLU_{B} der B-Seite in der IFH durchgeführt. Dort erhalten alle ankommenden Zellen mit der Pfadkennung VCI_{B} eine neue Pfadkennung VPI_{C}, sowie neue Routing-Kennungen R_{C} für den Pfad durch die lokale Koppeleinrichtung ASNS der Teilnehmereinheit SLU_{B}.

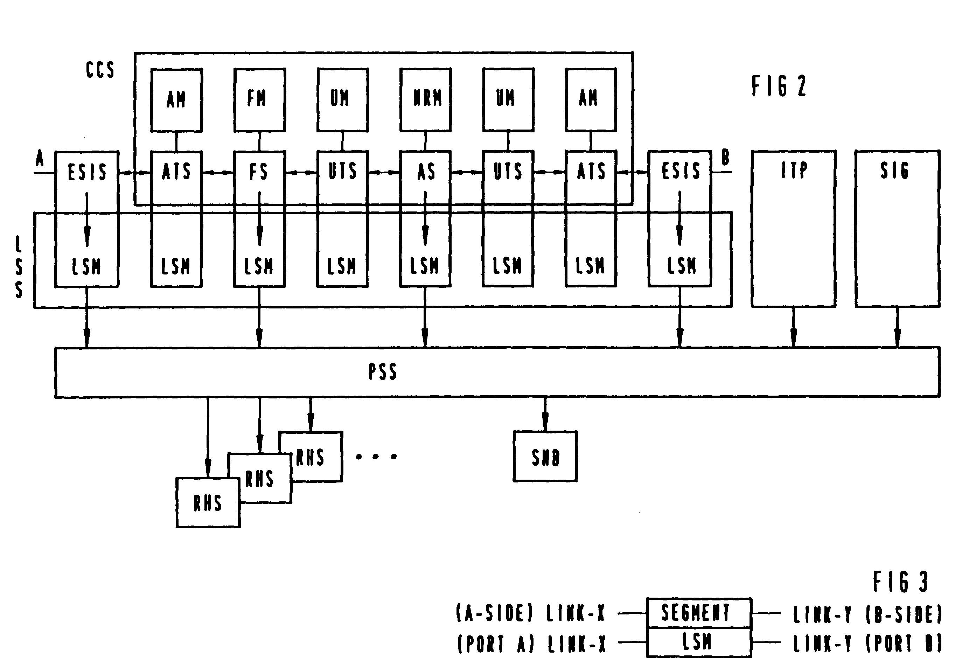

FIG 2 zeigt die modulare Zusammensetzung eines speziellen Anwendersystems, nämlich des Call-Processing-Systems zur Steuerung von Nutzverbindungen (Calls) sowie dessen Einordnung bezüglich weiterer Software-Systeme zur Steuerung von Verbindungen (Connections) innerhalb eines Vermittlungssystems.

Das Call-Processing-System umfaßt ein Call-Control-System CCS zur Steuerung einer Verbindung auf logischer Ebene, ein ESIS zur Abschirmung des Call-Control-Systems von verschiedenen Signalisierungsvarianten und ein Koordinierungssystem LSS zur Koordinierung der von dem Call-Control-System erzeugten logischen Verbindungsanforderungen gegenüber einem Switching-Control-System PSS. Das Schnittstellensystem ESIS und das Call-Control-System kann zusammengefaßt als ein spezielles Connection-System, nämlich ein Call-Connection-System betrachtet bzw. bezeichnet werden. Das Switching-Control-System kann als die zentrale Steuerung eines Ressourcen-Control-Systems betrachtet werden.

Auf der gleichen Ebene wie das Call-Processing-System sind des weiteren ein Processing-System ITP (Systemadministration) und ein Processing-System SIG (Signalisierungsadministration) zur Steuerung von Signalisierungsverbindungen eines Signalisierungssystems dargestellt.Diese Processing-Systeme enthalten ebenfalls, wie das Call-Processing-System, Connection-Systeme, die sich an das Switching-Control-System PSS, wenden, um ihre logischen Verbindungswünsche auf physikalischer Ebene zu realisieren.

FIG 2 zeigt des weiteren den dezentralen Teil des Ressourcen-Control-Systems, nämlich Ressourcen-Systeme RHS zur lokalen Steuerung der Ressourcen des Vermittlungssystems und die Hauptkoppeleinrichtung SNB, die als einzige Ressource des Vermittlungssystems direkt vom Switching-Control-System gesteuert wird.

Im folgenden wird das Call-Processing-System beschrieben.

Das ESIS bewirkt die Abschirmung des Call-Control-Systems CCS von verschiedenen Signalisierungsvarianten, indem es die verschiedenen Signalisierungsschemata in eine allgemeine Nachrichtenschnittstelle zwischen ESIS und CCS umwandelt. Die interne Struktur des ESIS ist streng modular mit separaten Softwaremodeln für jedes unterstützte Signalisierungssystem bzw. jede Variante davon. Durch diese Softwaremoduln werden im Zusammenhang mit Verbindungen entsprechende Instanzen erzeugt oder entfernt, je nachdem, welche verbindungsspezifischen Signalisierungsanforderungen auftreten. Das Call-Control-System CCS sieht jedoch trotz der unterschiedlichen Softwaremoduln immer eine allgemeine Nachrichtenschnittstelle zum ESIS.

Das ESIS ist außerdem zuständig für den verbindungsbezogenen Signalisierungsaustausch zwischen verschiedenen Signalisierungssystemen.

Das Call-Control-System CCS dient der Steuerung der Verbindung auf logischer Ebene. Seine Aufgaben beinhalten die Verkehrslenkung, den standardmäßigen Verbindungsauf- bzw. -abbau, Behandlung von Leistungsmerkmalen, Benachrichtigen des Gebührensystems und des Statistiksystems über Call-Events, usw. Das Aufgabengebiet des CCS schließt die Steuerung des physikalischen Verbindungsauf- bzw. -abbau nicht ein. Dieser wird zwar durch das CCS initialisiert, jedoch durch das Switching-Control-System PSS selbständig gesteuert. Im folgenden werden nur die Aufgaben des CCS bezüglich der Verbindungssteuerung näher betrachtet.

Das CCS umfaßt zwei Typen von Software-Einheiten, nämlich statische Moduln (Manager) und transiente Moduln, die als Call-Segmente bezeichnet werden. Die genannten Call-Segmente erzeugen pro Verbindung eine Reihe von Instanzen (Prozeß- oder Dateninstanzen), die untereinander über eine gemeinsame Nachrichtenschnittstelle kommunizieren. Im folgenden werden die genannten Instanzen auch als Segmente bezeichnet und die kommunizierende Reihe von Instanzen auch als Call-Kette.

Unter den Call-Segmenten gibt es Access-Segmente ATS, die die technischen Merkmale des betreffenden Ports repräsentieren, Anwender-Segmente UTS, die die Leistungsmerkmale des Anwenders repräsentieren, Verknüpfungs-Segmente AS (Associater Segments) die die Verknüpfung der A- und B-Seite repräsentieren und Feature-Segmente FS, die nicht standardmäßige Merkmale einer Verbindung, d.h. individuelle Merkmale repräsentieren. Die genannten Call-Segmente werden für eine Verbindung in Abhängigkeit von verbindungsspezifischen Anforderungen und Teilnehmer/Netz-Merkmalen erzeugt oder entfernt.

Das Koordinierungssystem LSS koordiniert Verbindungsanforderungen, die von verschiedenen Call-Segmenten und ESIS-Segmenten herrühren. Hierzu muß das Koordinierungssystem die von jedem Segment erhaltenen Verbindungsanforderungen zwischenspeichern. Dies geschieht in einem pro Segment zugeordneten Koordinierungsmodul LSM. Jedes Mal, wenn ein Schaltkoordinierungsmodul eine neue Verbindungsanforderung von einem Segment empfängt, wird der Zustand des Koordinierungsmoduls ausgewertet und aufdatiert. Durch einen verteilten Kontrollmechanismus zwischen den Koordinierungsmoduln wird gewährleistet, daß das Koordinierungssystem zu einer konsistenten physikalischen Verbindungsanforderung gegenüber dem Switching-Control-System PSS gelangt.

Im folgenden wird das Switching-Control-System beschrieben.

Das Switching-Control-System ist ein grundlegendes Service-System für alle Anwendersysteme des Vermittlungssystems, die Verbindungen innerhalb des Vermittlungssystems anfordern. Außer einfachen Verbindungsanforderungen behandelt das Switching-Control-System auch spezielle Verbindungsanforderungen für die Rekonfiguration von für die Anwendersysteme aufgebauten Verbindungen.

Das Switching-Control-System erzeugt pro Verbindungsanforderung jeweils eine eigenständige Instanz. Dadurch sind die Interaktionen zwischen Switching-Control-System und den Ressourcensystemen bzw. der Hauptkoppeleinrichtung von dem Zustand der Instanzen des jeweiligen Anwendersystems unabhängig.

Das Koordinierunssystem transformiert die private Sichtweise einer Verbindung, die den Segmenten (Instanzen) des Call-Control-Systems und des Signalisierungsschnittstellensystems zu eigen ist, in eine einzige konzistente Verbindungsanforderung gegenüber dem Switching-Control-System. Aus diesem Grund darf das Switching-Control-System Verbindungsaufträge von dem Koordinierungssystem in unbedingter Weise ausführen. Die einzigen Gründe für eine negative Rückmeldung zum Koordinierungssystem sind Blockierungsbedingungen der Steuerungen der Koppeleinrichtungen (z.B. eine negative Rückmeldung von einem der Ressourcen-systeme RHS) oder Fehler in den Koppeleinrichtungen selbst (z.B. eine negative Rückmeldung von einzelnen Koppeleinrichtungen).

Jede Verbindungsanforderung an das Switching-Control-System ruft eine neue Transaktion des Switching-Control-Systems hervor. Eine solche Transaktion umfaßt die Steuerung der beteiligten Ressourcensysteme und somit die Koordinierung des Aufbaus eines physikalischen Pfades durch die Koppeleinrichtungen des Vermittlungssystems.

Da die eigentliche Ressourcenbehandlung (Pfad-Ressourcen und Serviceeinheit-Ressourcen) vom Switching-Control-System getrennt ist und durch von diesen unabhängige Ressourcen-systeme durchgeführt wird, erfordert das Switching-Control-System keine Zuordnung zu einem bestimmten zentralen Steuerungsprozessor von den zentralen Steuerungsprozessoren GPx,...GPy (siehe FIG 1). Darüber hinaus gibt es keine Einschränkung dahingehend, daß Verbindungsanforderungen, die derselben Call-Kette entspringen, sich an dieselbe Instanz des PSS wenden müssen. Dies erlaubt eine sehr effektive Implementation der Funktionen des Swichting-Control-Systems innerhalb des Hardware-Systems. Jeder zentrale Steuerungsprozessor kann somit mehrere Instanzen des Switching-Control-Systems parallel bedienen. Dadurch kann ein Anwendersystem seine Verbindungsanforderungen immer an ein Switching-Control-Systems seines eigenen zentralen Steuerungsprozessors stellen. Da das Switching-Control-System auf Bestätigungen der Ressourcensysteme und/oder der Hauptkoppeleinrichtung wartet, ist es möglich, eine parallele Ausführung der Verbindungsanforderungen für unterschiedliche Verbindungen auf jeweils einem einzigen zentralen Steuerungsprozessor durchzuführen. Hierzu muß ein bestimmter Instanziierungsmechanismus pro zentralem Steuerungsprozessor zur Verfügung gestellt werden (z.B. Prozeßinstanziierung oder Dateninstanziierung).

Ressourcen, die einer Verbindung zugeordnet sind, müssen während der Dauer einer Verbindung verbindungsindividuell gespeichert werden, um die Verbindung am Ende abbauen zu können. Wenn diese Daten im Switching-Control-System gespeichert würden, müßte dieses wesentlich komplexer aufgebaut sein. Es würde z.B. jeweils eine PSS-Instanz für die gesamte Dauer der Verbindung geben, was eine zusätzliche State/Event-Kopplung innerhalb des PSS erfordern würde und darüber hinaus neue Überprüfungen der Konsistenz der Verbindungsanforderungen zwischen dem PSS und den Anwendersystemen. Um diese vergrößerte Komplexität zu vermeiden, werden die Verbindungsdaten innerhalb des jeweiligen Anwendersystems gespeichert. Beispielsweise werden die Verbindungsdaten für das Call-Processing-System in zu dem Koordinierungssystem zugehörigen Datenfeldern gespeichert. Zu der Realisierung dieses Konzepts wird eine sogenannte "path envelope" zwischen dem Anwendersystem und dem Switching-Control-System hin- und hergereicht, die die aktuellen Verbindungsdaten (Pfaddaten und sonstige Ressourcendaten) enthalten. Während die path envelope für das Anwendersystem eine black box darstellt, wird der Inhalt dieser path envelope durch das Switching-Control-System ausgewertet, um eine optimierte Pfadsuche für die Verbindungsanforderungen durchzuführen.

Das Switching-Control-System stellt somit zusammenfassend eine Schnittstelle zwischen dem Call-Processing-System und den Ressourcensystemen bzw. der Hauptkoppeleinrichtung dar, die es dem Call-Processing-System erlaubt, kombinierte Verbindungsanforderungen, die eine Ressourcenbehandlung und ein Switching beinhalten, in einer einzigen Verbindungsanforderung an das Switching-Control-System zu stellen. Das Switching-Control-System sorgt indessen für die Koordination der Durchführung der kombinierten Verbindungsanforderung.

Im folgenden wird das Call-Control-System detaillierter beschrieben.

Das Call-Control-System umfaßt, wie bereits erwähnt, zwei Typen von Software-Einheiten, nämlich statische Einheiten (Manager) und transiente Einheiten (Segmente).

Statische Manager verwalten hauptsächlich langlebige Call-Processing-Entitäten, z.B. eine Rufnummer eines Teilnehmers oder den Typ eines Ports. Es gibt jeweils einen statischen Manager pro Entität, der eine neutrale Schnittstelle zwischen dem Call-Processing und der statischen Datenbasis bildet. Statische Manager schirmen somit die Verbindungssteuerung von der Struktur der physikalischen Datenbasis ab. Sie stellen außerdem auf die jeweilige Entität bezogene Funktionen durch, z.B. Busy/Idle-Behandlung. Um eine Effizienz bezüglich der Echtzeit zu erreichen, sind statische Manager örtlich nahe an dem von ihnen verwalteten Daten angesiedelt und können sogar innerhalb einer Software-Kapsel der physikalischen Datenbasis enthalten sein. Statische Manager kennen des weiteren alle aktiven transienten Segmente (Instanzen), denen sie momentan ihre Dienste zur Verfügung stellen und liefern diesen aktiven transienten Segmenten als Antwort Daten in einem für das Call-Processing definierten Format.

Transiente Segmente verwalten kurzlebige Entitäten, z.B. eine standardmäßige Verbindung oder ein Leistungsmerkmal. Transiente Segmente werden aufgrund von Anwender/Netz-Aktionen wie "Abnehmen" oder "Auflegen" erzeugt oder vernichtet und führen logische Call-Control-Funktionen aus, z.B. Behandeln des Belegens bzw. Auslösens eines Ports und Durchführen von spezifischen Aktionen für ein Leistungsmerkmal. Zu Beginn einer Verbindung werden die transienten Segmente erzeugt und wenden sich an ihren jeweils zugeordneten statischen Manager, um die von ihnen benötigten Daten aus der Datenbasis zu erhalten. Die transienten Segmente speichern die erhaltenen Daten und arbeiten mit diesen Daten während der gesamten Dauer einer Verbindung. Am Ende einer Verbindung werden die transienten Segmente vernichtet und damit auch die von ihnen verwalteten transienten Daten.

Im folgenden werden die einzelnen Typen der statischen Manager näher beschrieben:
Ein Access-Manager AM repräsentiert einen vom Signalisierungstyp unabhängigen physikalischen Teilnehmer-/Netz-Zugang, der durch eine logische Access-Kennung festgelegt ist. Dieser Manager kennt die zu einem bestimmten physikalichen Zugang gehörigen Ressourcen (Kanäle, Bandbreite und Terminals) sowie Blockierungsbedingungen und diesem physikalischen Zugang zugeordnete logische User Kennungen. Ein Access-Manager führt außerdem die Access-bezogene Frei/ Belegt-Behandlung durch und. weist die hierzu angeforderten Access-Ressourcen zu (z.B. Zuweisung einer VPI/VCI-Nummer).

Schließlich hat ein Access-Manager für die von ihm bedienten transienten Segmente jeweils den Link zu den von dem nächsten transienten Segment geforderten Entitäten zu bestimmen.
Im Falle einer A-Verbindungsseite bedeutet "Bestimmen eines Links" für den Access-Manager das Festlegen einer logischen User-Kennung. Dies erfordert entweder das Überprüfen einer von dem User selbst gelieferten logischen User-Kennung oder das Ermitteln einer dem vorliegenden physikalischen Zugang zugeordneten logischen User-Kennung (z.B. im Falle eines Analog-Users).
Im Falle einer B-Verbindungsseite bedeutet das Bestimmen eines Links für den Access-Manager das Festlegen der logischen Signalisierungstyp-Kennung. Diese wird auf der Grundlage der logischen Access-Kennung und gegebenenfalls vorgegebener Terminals ermittelt.

Ein User-Manager UM repräsentiert einen Teilnehmer (User), der durch eine logische User-Kennung (z.B. Rufnummer) festgelegt ist. Dieser Manager kennt die für den bestimmten User vorgesehenen Grenzen für die Anforderung nach Ressourcen, administrative Blockierungsbedingungen und Features des Users.
Der User-Manager ist zuständig für alle standardmäßigen Call-Processing-Funktionen, die im Zusammenhang mit den genannten User-bezogenen Daten stehen. Der User-Manager führt außerdem die User-bezogene Frei/Belegt-Behandlung durch und weist angeforderte User-Ressourcen zu.
Schließlich bestimmt der User-Manager im Falle eines Users der B-Verbindungsseite die logische Access-Identifikation, die den Link zu den Entitäten des nächsten transienten Segmentes (ATS-Segment) bildet.

Ein Feature-Manager FM wird für individuelle Features benötigt. Er verwaltet Feature-bezogene Daten, die mit dem Teilnehmer oder der Gruppe, die dieses Leistungsmerkmal (Feature) abonniert hat, verknüpft werden. Durch den Feature-Manager wird eine Trennung der Feature-Daten von den normalen Teilnehmerdaten erreicht, so daß eine Erweiterung bzw. eine Veränderung der Leistungsmerkmale nicht notwendigerweise einen Einfluß auf das standardmäßige Call-Processing ausübt.

Ein Trunk-Group-Manager TGM verwaltet eine logische Trunk-Gruppe. Er führt eine Trunk-Auswahl auf der abgehenden Verbindungsseite durch und markiert einen Kanal der Trunk-Gruppe auf der ankommenden Verbindungsseite als belegt. Des weiteren liefert er Trunk-Group-bezogene Daten zu einem Trunk-Group-Segment TGS.

Ein Network-Routing-Manager NRM wertet die empfangenen Informationen (z.B. Wahlziffern) mit Hilfe eines Übersetzers aus und legt eine geeignete Behandlung der Verbindung fest. Der NRM kann mehrere Übersetzer steuern (z.B. POTS, CENTREX, packet etc.), die entsprechend den Wünschen der Kunden hinzugefügt und verwaltet werden können. Die neutrale Schnittstelle zwischen Call-Segmenten und dem Network-Routing-Manager schirmt die Call-Segmente von der spezifischen Architektur der Übersetzer ab.

Im folgenden werden die einzelnen Typen der transienten Segmente näher erläutert.
Ein Access-Segment ATS repräsentiert die Steuerung von Access-bezogenen Transaktionen. Es erzeugt z.B. aus jeder SETUP-Nachricht eine eigenständige Anforderung nach Access-Ressourcen. Access-Ressourcen können einen einzelnen B-Kanal oder D-Kanal eines Teilnehmers, eine einzelne Verbindungsleitung (Trunk) oder eine zugeordnete Bandbreite mit mehreren Kanälen umfassen. Das ATS steuert außerdem die Triggerung von entsprechenden Feature-Segmenten FS zur Steuerung von Access-bezogenen Features.

Ein User-Segment UTS repräsentiert die Steuerung von User-bezogenen Transaktionen. Es erzeugt hierbei jeweils eine einzelne Anforderung nach User-Ressourcen. Das UTS steuert außerdem die Triggerung von User-Features.

Ein Trunk-Group-Segment TGS steuert die Beteiligung eines Trunks einer Trunk-Gruppe in einer Verbindung. Das TGS-Segment fordert dabei von dem TGM-Manager die Durchführung der Auswahl eines Trunks auf der abgehenden Verbindungsseite und informiert ihn, daß der Trunk auf der ankommenden Verbindungsseite belegt ist.

Ein Verknüpfungs-Segment AS verknüpft ein Verbindungspaar der A-Seite und B-Seite. Es koordiniert dabei den Verbindungsaufbau und Verbindungsabbau und initiiert die Übersetzungs-/Routing-Aktivitäten durch den NRM-Manager.

Ein Feature-Segment FS steuert die Behandlung teilnehmerindividuelller Leistungsmerkmale. FS-Segmente werden in eine bereits bestehende Call-Kette eingefügt, wenn sie von einem Teilnehmer oder vom Netz angefordert werden. Jedes FS-Segment enthält Feature-bezogene Logik und hat Zugang zu Feature-bezogenen Daten der Datenbasis. Durch das FS-Segment ist die Feature-bezogene Logik somit in einer einzigen Software-Einheit zentralisiert. Advanced-Intelligent-Network-Dienste werden z.B. durch ein FS-Segment unterstützt, indem es eine Schnittstelle zu einem Service-Control-Point (SCP) bildet. Im Prinzip kann ein FS-Segment in die Call-Kette zwischen ein ESIS-Segment und ein ATS-Segment, ein ATS-Segment und ein UTS-Segment oder ein UTS-Segment und ein AS-Segment eingefügt werden. Dies hängt von derartigen Dingen wie dem relevanten Triggerpunkt und ressourcenbezogenen Anforderungen ab.

Im folgenden wird der Ablauf bei einem Verbindungsaufbau für einen standardmäßigen Call beschrieben.

Zunächst erfaßt das Teilnehmeranschlußmodul eines Teilnehmers A eine Belegungs-Nachricht und sendet daraufhin eine SETPUP-Nachricht zu dem ihm zugeordneten Gruppenprozessor GP, worauf ein ESIS-Segment zum Empfang dieser Nachricht erzeugt wird. Das ESIS-Segment konvertiert die empfangene SETUP-Nachricht in eine allgemeine SETUP-Nachricht für das Call-Control-System, fordert ein ATS-Segment an und übergibt die allgemeine SETUP-Nachricht dem ATS.

Das Access-Segment ATS fordert daraufhin Access-bezogene Daten von seinem Access-Manager AM an. Der AM liest Access-bezogene Daten aus der Access-Datenbasis, führt eine Access-bezogene Belegt/Frei-Behandlung durch und übergibt schließlich die angeforderten Access-bezogenen Daten dem ATS.
Das ATS speichert die Access-bezogenen Daten, fordert ein UTS an und übergibt die SETUP-Nachricht dem erzeugten UTS.

Das UTS fordert User-bezogene Daten von seinem UM-Manager an. Der UM liest die angeforderten Daten aus der User-Datenbasis, führt eine User-bezogene Belegt/Frei-Behandlung durch und übergibt die angeforderten User-bezogenen Daten dem UTS.
Das UTS fordert daraufhin ein AS an, das seinerseits wiederum Wahlziffern anfordert. Die Anforderung von Wahlziffern wird über eine Nachricht, die die Call-Kette vom AS hinunter zum ESIS der A-Seite gesandt wird. Zu diesem Zeitpunkt besteht die Call-Kette der A-Seite aus ESIS-ATS-UTS-AS.

Nun ermittelt das ESIS anhand des Typs des Signalisierungssystems, ob ein Wählton und ein Code-Empfänger benötigt werden und informiert das Switching-Control-System PSS über das Koordinierungssystem LSS. Das PSS bestimmt die optimale Ressourcenkonfiguration und fordert daraufhin eine Zuweisung und Verbindung der ausgewählten Ressourcen von dem entsprechenden Ressourcensystem RHS an. Das RHS speichert die Auswahl der physikalischen Ressourcen ab und steuert daraufhin die Durchschaltung der ausgewählten Ressourcen. Wenn der Code-Empfänger Wahlziffern empfängt, sendet er sie direkt zu dem zugeordneten ESIS. Das ESIS erzeugt daraufhin eine Anforderung an das Koordinierungssystem LSS zur Abschaltung des Wähltons, konvertiert die Wahlziffern in eine standardmäßige Darstellung und sendet sie die Call-Kette hinauf zu dem AS-Segment.

Die Wahlziffern fließen dabei über das ATS-Segment und das UTS-Segmet und werden schließlich vom AS-Segment empfangen. Das AS sendet die Wählziffern zum NRM-Manager, der die Wählziffern einer notwendigen Übersetzung durch Übersetzer unterziehen läßt. Sobald das Übersetzungsergebnis feststeht, gibt der NRM-Manager das Ergebnis dem AS-Segment zurück, welches daraufhin die Erzeugung eines UTS-Segments auf der B-Seite veranlaßt.

Wenn das Ende des Wählvorganges erkannt worden ist, veranlaßt das ESIS-Segment der A-Seite die Abschaltung des Code-Empfängers mittels einer entsprechenden Anforderung an das Switching-Control-System PSS via das Koordinierungssystem LSS. Das Switching-Control-System PSS beauftragt daraufhin das Ressourcensystem RHS, das die genannte physikalische Ressource, nämlich den Code-Empfänger, abschaltet und wieder freigibt.

Das UTS-Segment der B-Seite fordert nun Daten von seinem User-Manager UM, der daraufhin den Belegt-Zähler der Rufnummer überprüft und ihn inkrementiert. Das UTS-Segment der B-Seite fordert daraufhin ein ATS-Segment an. Das ATS-Segment fordert sodann Daten von seinem Access Manager AM an, der daraufhin den Access-bezogenen Belegt/Frei Status überprüft und den Access belegt.

Das ATS-Segment fordert daraufhin ein ESIS-Segment an, welches daraufhin dem Teilnehmeranschlußmodul des Teilnehmers B den Auftrag zum Belegen erteilt und die hierzu notwendigen Daten sendet. Das Teilnehmeranschlußmodul legt daraufhin den Rufstrom an. Das ESIS-Segment der B-Seite fordert nun die Anschaltung des Freitons von dem Koordinierungssystem LSS, das daraufhin eine entsprechende Anforderung an das Switching-Control-System PSS abgibt. Das PSS ermittelt den physikalischen Pfad durch die von dem Call betroffenen Koppeleinrichtungen und fordert daraufhin vom Ressourcensystem RHS die Zuweisung und Durchschaltung des Freitons.

Zu diesem Zeitpunkt wird der physikalische Weg in rückwärtiger Richtung durchgeschaltet. Der Freiton zur A-Teilnehmerseite wird also über das Teilnehmeranschlußmodul SLM_{B} geliefert.

Wenn der B-Teilnehmer abhebt, wird dies von dem ihm zugeordneten Teilnehmeranschlußmodul erkannt. Das Teilnehmeranschlußmodul schaltet daraufhin den Rufstrom ab und sendet eine OFF-HOOK-Nachricht zu dem ESIS-Segment des ihm zugeordneten Gruppenprozessors GP.

Das ESIS-Segment fordert daraufhin die Abschaltung des Freitons an, reicht eine CONNECT-Nachricht durch die Call-Kette zum AS-Segment weiter und veranlaßt dadurch den Aufbau des Sprachweges in Vorwärtsrichtung. Die Kommunikation über die Sprachwege kann nun erfolgen.

Im folgenden wird das Koordinierungssystem LSS gemäß FIG 2 näher beschrieben.

Das Koordinierungssystem koordiniert, wie bereits erwähnt, Verbindungsanforderungen, die von verschiedenen Segmenten herrühren. Hierzu speichert es die von den verschiedenen Segmenten empfangenen Verbindungsanforderungen. Für die Speicherung einer Verbindungsanforderung eines Segmentes ist jeweils ein Koordinierungsmodul LSM vorhanden. Jedes Mal wenn eine neue Verbindungsanforderung von einem Segment empfangen wird, wird der Zustand dieser Koordinierungsmoduln ausgewertet und aufdatiert. Der Kontrollmechanismus zwischen den Koordinierungsmoduln gewährleistet, daß das Koordinierungssystem LSS jeweils einen einzigen konsistenten Schaltauftrag an das Switching-Control-System PSS übergibt.

Um einen dynamischen Mehraufwand für den Kommunikationsbedarf des Koordinierungssystems (intern zwischen den Koordinierungsmoduln und extern zwischen den Koordinierungsmoduln und den Segmenten) zu verringern, ist das Koordinierungssystem stark mit dem ESIS-/CCS-System verbunden. Insbesondere ist ein Koordinierungsmodul jeweils so fest mit einem Segment verbunden, daß Verbindungsanforderungen von den Segmenten an das Koordinierungssystem bzw. die Koordinierungsmoduln lokale Prozeduraufrufe darstellen.

Darüber hinaus werden die Nachrichten zwischen den Segmenten benützt, um Koordinierungsinformationen zwischen den Koordinierungsmoduln zu übertragen. Dies zahlt sich besonders beim Verbindungsaufbau aus. Der Verbindungsaufbau ist nämlich besonders kommunikationsintensiv für das Koordinierungssystem, da Empfänger und Töne an und abgeschaltet werden müssen. Da der Informationfluß zwischen den Koordinierungsmoduln tatsächlich parallel zu dem Informationsschluß der Segmente verläuft entsteht kein zusätzlicher Mehraufwand bezüglich der Kommunikation des Call-Processing-Systems, wenn Nachrichten zwischen den Koordinierungsmoduln in Nachrichten zur Kommunikation zwischen den Segmenten eingebettet werden.

Obwohl somit das Koordinierungssystem sehr stark mit ESIS/CCS-System verbunden ist, bleibt dennoch eine klare Auftrennung zwischen dem Koordinierungssystem und dem ESIS/CCS-System vorhanden, nämlich eine wohldefinierte Prozedur-Schnittstelle.

Abgesehen von der Koordinierung der Verbindungsanforderungen der Segmente, dient das Koordinierungssystem auch der Übersetzung der Verbindungsanforderungen in Schaltaufträge für das Switching-Control-System. Die Segmente können sich daher bei der Formulierung ihrer Verbindungsanforderungen auf eine sehr abstrakte Beschreibung beschränken (abstrakte Sichtweise einer Verbindung ), die die gesamte Koppeleinrichtung als eine Black box ansieht.

Im folgenden wird die Sichtweise der Segmente und der Koordinierungsmoduln bezüglich einer Verbindung anhand von FIG 3 näher erläutert.

Die meisten Segmente besitzen zwei Links, nämlich Link-X und Link-Y. Segmente für spezielle Leistungsmerkmale können jedoch auch mehr als zwei Links besitzen, z.B. das Segment zur Realisierung des Drei-Wege-Calling hat drei unmittelbare Nachbarsegmente in der Call-Kette und damit drei Links. Die Segmente assoziieren mit jedem ihrer Links jeweils eine bestimmte Verbindungsseite. Diese Assozation wird bei der Erzeugung des Segmentes durch entsprechende Zuordnung festgelegt. Gemäß dieser Sichtweise formuliert ein Segment eine Verbindungsanforderung immer mit Hilfe seiner logischen Links, z.B. "Verbinde Link-X mit Link-Y" oder "Verbinde Link-X mit einer Ansage".

Ein Koordinierungsmodul LSM, das einem bestimmten Segment fest zugeordnet ist, besitzt zur Zwischenspeicherung einer Verbindungsanforderung die gleichen Datenfelder wie das zugehörige Segment. Ein Koordinierungsmodul kennt also dieselben Links wie sein zugeordnetes Segment. Im Unterschied zum Segment werden diese Links in der Sichtweise eines Koordinierungsmoduls jedoch mit der Portadresse assoziiert.

Für eine ATM-Koppeleinrichtung bedeutet der einem Teilnehmer oder einer Verbindungsleitung zugeordnete Verbindungsendpunkt eine VCI-/VPI-Nummer. Für ein Koordinierungsmodul bedeutet der Verbindungsendpunkt - wie bereits erwähnt - eine VPI-/VCI-Nummer an einem bestimmten Port. Die Portadresse (inklusive belegte VPI-/VCI-Nummer) eines Verbindungsendpunktes der Call-Kette wird durch den Access-Manager AM verwaltet und jedes Mal dann über die Call-Kette den entsprechenden Koordinierungsmoduln übergeben, wenn eine von einem aktiven Verbindungsendpunkt ausgehende Anforderung erkannt wird.

Im folgenden wird der Einfachheit halber ein Verbindungsendpunkt als "Port" bezeichnet, ohne die zugeordnete VPI-/VCI-Nummer explizit zu erwähnen.

Die Verbindungs-Sichtweise (connection view) eines Koordinierungsmoduls umfaßt außer der Portadresse und VPI-/VCT-Nummer auch den Typ des betroffenen Ports (Port ist hier im Sinne von Verbindungsendpunkt zu verstehen). Wenn eine Ressource (passiver Port) mit einem bestimmten Link verbunden werden soll, wird durch die Verbindungsanforderung eines Segmentes auch der Typ der Ressource angegeben (z.B. Ansage, Broadcast tone, Brücke). Die Aktionen des Koordinierungssystems für eine empfangene Verbindungsanforderung von einem bestimmten Segment hängen vom Verbindungszustand und den assoziierten Porttypen ab. Der genannte Zustand wird dabei durch die Gesamtheit der in den Koordinierungsmoduln abgespeicherten Zustände gebildet. Um eine Verbindungsanforderung auszuführen ist deshalb ggf. eine Kommunikation zwischen den Koordinierungsmoduln erforderlich. Beispiele für Port-Typen sind: "Aktiver Port" für Ports die einem Teilnehmer oder einer Verbindungsleitung zugeordnet sind, "Ansage-Port", "Brücken-Port", und "O-Port" für keine Verbindungen.

Im folgenden wird der interne Kontrollmechanismus des Koordinierungssystems beschrieben.

Anreizsignale von aktiven Ports, die mit Teilnehmern oder Verbindungsleitungen assoziiert werden, müssen koordiniert werden. Für einen standardmäßigen Call gibt es genau zwei aktive Ports, die der A-Seite und der B-Seite der standardmäßigen Verbindung zugeordnet werden. Um ein Anreizsignal von einem aktiven Port, bzw. genauer gesagt die daraus abgeleitete Verbindungsanforderung, zu koordinieren, wird ein Kontrollmechanismus angewandt. Gemäß diesem Kontrollmechanismus wird die Kontrolle über einen aktiven Port zu einem bestimmten Zeitpunkt immer genau einem Koordinierungsmodul des Koordinierungssystems zugeordnet. Wenn ein Koordinierungsmodul die genannte Kontrolle über einen Port hat, kann es für diesen Port Verbindungsanforderungen an das Switching-Control-System PSS senden.

Wenn ein Segment eine Verbindungsanforderung für einen Port stellt, über den sein ihm zugeordnetes Koordinierungsmodul zu diesem Zeitpunkt keine Kontrolle hat, gibt es drei Alternativen:
1. Alternative: Das Koordinierungsmodul ist berechtigt, die Kontrolle über den Port (Verbindungsendpunkt) von einem anderen Koordinierungsmodul anzufordern,
2. Alternative: Das Koordinierungsmodul muß warten, bis ein anderes Koordinierungsmodul die Kontrolle über den Port freigibt,
3. Alternative: Das Koordinierungsmodul ist berechtigt, die Anforderung einem anderen Koordinierungsmodul zu übergeben, das die Kontrolle über den Port erlangen kann.

Die Auswahl einer der genannten Alternativen erfolgt nach Prioritätsregeln, die mit den Prioritätsregeln für die Segmente des ESIS-/CCS-Systems übereinstimmen. Beim ESIS/CCS-System besitzen Segmente, die näher an der Signalisierungsquelle (aktiver Port) liegen, Priorität für Signale, die auf ihrer Verbindungsseite entstehen. Analog dazu besitzen beim Koordinationssystem LSS diejenigen Koordinierungsmoduln, die innerhalb der Call-Kette der Signalisierungsquelle am nähesten liegen, die höchste Priorität für die Kontrolle des aktiven Ports ihrer Verbindungsseite. Dies bedeutet, daß Verbindungsanforderungen von weiter entfernt liegenden und damit weniger priorisierten Segmenten gegenüber solchen, die näher am aktiven Port liegen, nachgestellt werden. Nachgestellte Verbindungsanforderungen werden im Koordinierungsmodul des anfordernden Segments gespeichert und werden aktiv sobald das höher priorisierte Segment die Kontrolle über den aktiven Port freigibt.

Beim Call-Control-System CCS spielt das AS-Segment eine zentrale Rolle als Bindeglied zwischen Segmenten der A-Seite und der B-Seite. Diese zentrale Rolle bleibt auch für das AS-Koordinierungsmodul erhalten. Das AS-Koordinierungsmodul ist das einzige Koordinierungsmodul, das die Kontrolle über den Port der A-Seite und der B-Seite erlangen kann. Alle anderen Koordinierungsmoduln können nur die Kontrolle über den auf ihrer Verbindungsseite liegenden Port erlangen.

Da das AS-Koordinierungsmodul das einzige Koordinierungsmodul ist, das gleichzeitig die Kontrolle über die A-Seite und die B-Seite erlangen kann, ist es auch das einzige Koordinierungsmodul, das einen Schaltauftrag an das Switching-Control-System PSS übergeben kann, der eine Durchschaltung zwischen der A-Seite und der B-Seite bewirkt.

Durch die zentrale Rolle des AS-Koordinierungsmoduls wird es ermöglicht, die Kommunikation zwischen den Koordinierungsmoduln auf eine Hälfte der Call-Kette zu beschränken, wobei die Koordinierung der beiden Hälften durch das AS-Koordinierungsmodul gemanagt wird. Während ein normales Koordinierungsmodul niemals die Kontrolle über einen aktiven Port, der jenseits des AS-Koordinierungsmoduls liegt, erlangen kann, kann das mit diesem Koordinierungsmodul assoziierte Segment dennoch eine Verbindungsanforderung zur entfernten Verbindungsseite senden. Diese entfernten Verbindungsanforderungen müssen dem AS-Koordinierungsmodul übergeben werden, das die jeweilige Verbindungsanforderung schließlich an das Switching-Control-System weitergeben kann, sobald es die Kontrolle über die beteiligten Ports erlangt hat.

Die genannten Prioritätsregeln gelten in entsprechender Weise bezüglich eines Ports einer entfernten Verbindungsseite. Ein Koordinierungsmodul, das dem entfernten Verbinsdungsendpunkt am nähesten liegt, wird gegenüber den dem Verbindungsendpunkt entfernter liegenden Koordinierungsmoduln priorisiert.

Der erläuterte Kontrollmechanismus für Verbindungsanforderungen an das Koordinierungssystem ist durch die interne Struktur der Daten und der Logik des Koordinierungssystems realisiert. Um eine effektive Koordination innerhalb des Koordinierungssystems zu erreichen, umfassen die in einem Koordinierungsmodul enthaltenen Zustandsinformationen, abgesehen von den privaten Verbindungsdaten auch Informationen über den Ort in der Call-Kette, der momentan die Kontrolle über einen beteiligten Verbindungsendpunkt besitzt. Diese Information wird jedes Mal dann aufdatiert, wenn die genannte Kontrolle an ein anderes Koordinierungsmodul übergeben wird. Verbindungsanforderungen (Connection requests) an ein Koordinierungsmodul stammen entweder von einem Segment oder von einem anderen Koordinierungsmodul.

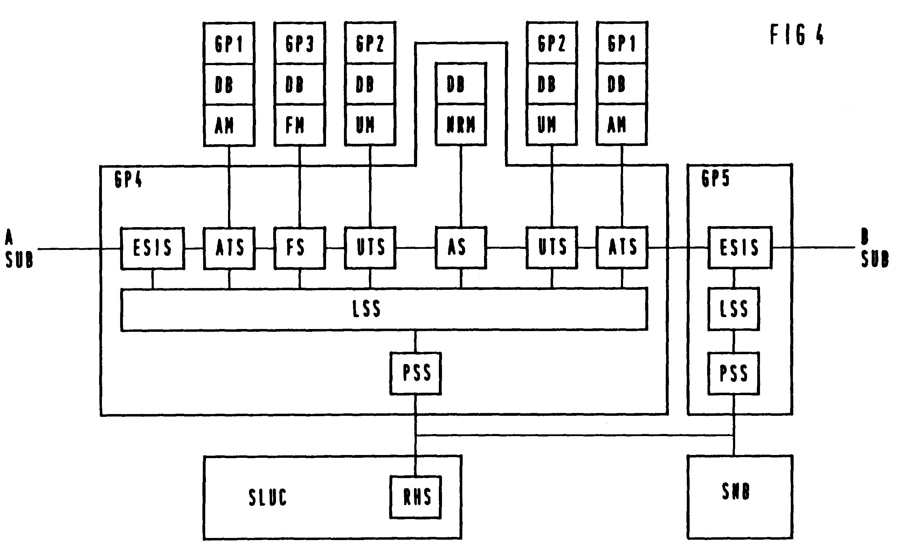

FIG 4 zeigt die Verteilung der im Zusammenhang mit der Verbindungssteuerung stehenden Software-Systeme auf zentrale Steuerungsprozessoren GP1, ..., GP5 und lokale Steuerungsprozessoren SLUC. Unter den zentralen Steuerungsprozessoren gibt es eine erste Gruppe von zentralen Steuerungsprozessoren, die jeweils ein transientes System, ein Koordinierungssystem LSS und ein Switching-Control-System PSS umfassen. In FIG 4 ist diese erste Gruppe von zentralen Steuerungsprozessoren durch die Steuerungsprozessoren GP4 und GP5 vertreten. Zusätzlich umfaßt ein solcher Steuerungsprozessor der ersten Gruppe einen Routing-Manager NRM und den von ihm verwalteten Teil der Datenbasis DB.In FIG 4 ist dieser Sachverhalt bei dem zentralen Steuerungsprozessor GP4 dargestellt.

Unter den zentralen Steuerungsprozessoren gibt es weiterhin eine zweite Gruppe von Steuerungsprozessoren, die jeweils ein statisches Modul (Manager AM, FM und UM) und den dazu gehörigen Teil der Datenbasis DB umfassen, welche in FIG 4 den zentralen Steuerungsprozessoren GP1, GP2 und GP3 entspricht.

Die allen Moduln gemeinsame Nachrichtenschnittstelle ist als eine Inter-Prozessor-Nachrichtenschnittstelle ausgebildet und ermöglicht somit die Verteilung einer Call-Kette über mehrere Steuerungsprozessoren. FIG 4 zeigt die Verteilung der Call-Kette über zentrale Steuerungsprozessoren bei einem standardmäßigen Call. Die dargestellte Verteilung minimiert den Aufwand an Kommunikation zwischen den transienten Moduln dadurch, daß möglichst die gesamte Call-Kette auf einem zentralen Steuerungsprozessor verteilt ist. Da das Signalisierungsschnittstellensystem ESIS jeweils einem bestimmten Teil der physikalischen Zugänge fest zugeordnet ist und der physikalische Zugang für den Teilnehmer B in FIG 4 dem Signalierungsschnittstellensystem des zentralen Steuerungsprozessors GP5 zugeordnet ist, kann die Call-Kette allerdings nicht vollständig auf einen zentralen Steuerungsprozessor beschränkt bleiben. Im übrigen hängt die Verteilung der Call-Kette auch von der Komplexität der logischen Verbindungsstruktur eines Calls, d.h. von den involvierten Features, ab. Das Ressourcensystem RHS befindet sich jeweils auf einem lokalen Steuerungsprozessor SLUC einer dezentralen Teilnehmereinheit SLU, und zwar gleichermaßen für interne und externe Teilnehmereinheiten.

Die statischen Moduln (Manager) sind eng an den von ihnen verwalteten Teil der Datenbasis DB gebunden und befinden sich deshalb jeweils auf demselben zentralen Steuerungsprozessor. Mit Ausnahme des statischen Moduls NRM befinden sich alle anderen statischen Module jeweils auf einem separaten zentralen Steuerungsprozessor.

## Patentansprüche

1. Call-Processing-System zur Steuerung von Verbindungen in einem Vermittlungssystem, mit folgenden Merkmalen:
a) einem Signalisierungsschnittstellensystem (ESIS), das die Schnittstelle des Call-Processing-Systems zu dem den jeweiligen Verbindungsseiten zugrunde liegenden Signalisierungstyp bildet und den vom Typ der Signalisierung abhängigen Teil der logischen Verbindungssteuerung durchführt,
b) einem Call-Control-System (CCS), das den vom Typ der Signalisierung unabhängigen Teil der logischen Verbindungssteuerung durchführt,
c) einer Initialisierung von Verbindungssteuerungsvorgängen auf physikalischer Ebene durch entsprechende Verbindungsanforderungen an ein Ressourcen-Control System (PSS, RHS), die von dem Signalisierungsschnittstellensystem (ESIS) und dem Call-Control-System (CCS) in einer voneinander unabhängigen Weise erzeugt werden,
d) einem Koordinierungssystem (LSS), das die von dem Signalisierungsschnittstellensystem und dem Call-Control-System an das Ressourcen-Control-System (PSS, RHS) gestellten und voneinander unabhängigen Verbindungsanforderungen koordiniert.

2. Call-Processing-System gemäß Anspruch 1,
**dadurch gekennzeichnet**,
daß das Call-Control-System (CCS) und das Signalisierungsschnittstellensystem ein transientes System mit mehreren transienten Moduln umfassen, wobei
a) die transienten Moduln pro Verbindung jeweils eine Kette von Instanzen dynamisch erzeugen, die durch eine allen transienten Moduln gemeinsame Nachrichtenschnittstelle miteinander kommunizieren,
b) eine Instanz jeweils eine Teilaufgabe der logischen Verbindungssteuerung eigenständig durchführt und dabei über das Koordinierungssystem (LSS) entsprechende eigenständige Verbindungsanforderungen an das Ressourcen-Control-System (PSS, RHS) stellen kann.

3. Call-Processing-System gemäß Anspruch 2,
**dadurch gekennzeichnet**,
daß
a) Anreiznachrichten, die von User-Aktionen herrühren, jeweils von den Instanzen an den Enden einer Kette zuerst empfangen werden und dann nach Ausführung einer der Instanz entsprechenden Teilaufgabe entlang der Kette weitergereicht werden können,
b) die Lage einer Instanz in der Kette durch die Funktion seines transienten Moduls festgelegt ist.

4. Call-Processing-System gemäß Anspruch 2,
**dadurch gekennzeichnet**,
daß das Call-Control-System (CSS) außerdem ein statisches System mit mehreren statischen Moduln umfaßt, wobei ein statisches Modul von den erzeugten Instanzen eines transienten Moduls Aufträge entgegennimmt und daraufhin den von der Struktur der Datenbasis abhängigen Teil der Steuerungsaufgabe eines transienten Moduls durchführt.

5. Call-Processing-System gemäß einem der Ansprüche 1 bis 4,
**dadurch gekennzeichnet**,
daß das Koordinierungssystem (LSS) Koordinierungsmodulen (LSM) umfaßt,
a) die für einen an einer Verbindung beteiligten aktiven Verbindungsendpunkt (VEP) erzeugte Verbindungsanforderungen empfangen und zwischenspeichern,
b) die eine von ihnen zwischengespeicherte Verbindungsanforderung an das Ressourcen-Control-System (PSS, RHS) weitergeben, wenn sie die Kontrolle über einen aktiven Verbindungsendpunkt (VEP) erhalten haben,
c) die die Kontrolle über einen bestimmten aktiven Verbindungsendpunkt (VEP) untereinander in der Weise vergeben, daß zu einem bestimmten Zeitpunkt immer nur ein Koordinierungsmodul die Kontrolle über diesen aktiven Verbindungsendpunkt (VEP) besitzt.

6. Vermittlungssystem mit einem Call-Processing-System gemäß einem der Ansprüche 1 bis 5,
**dadurch gekennzeichnet**,
daß es ein Ressourcen-Control-System mit einem Switching-Control-System (PSS) und Ressourcen-Systemen (RHS) umfaßt, wobei
a) das Switching-Control-System (PSS) die Verbindungen auf physikalischer Ebene in zentraler Weise steuert und hierzu Verbindungsanforderungen vom Call-Processing-System erhält, während
b) die Ressourcen-Systeme (RHS) des Vermittlungssystems die jeweiligen Ressourcen lokal steuern und hierzu Aufträge vom Switching-Control-System (PSS) erhalten.

7. Vermittlungssystem gemäß Anspruch 6,
**dadurch gekennzeichnet**,
daß
a) das Switching-Control-System (PSS) die vom Call-Processing-System erhaltenen Verbindungsanforderungen voneinander unabhängig bearbeitet,
b) das Switching-Control-System (PSS) bei erstmaligen Verbindungsanforderungen eine path envelope aufbaut, die den geschalteten Pfad beschreibende Daten enthält,
c) das Switching-Control-System (PSS) dem Koordinierungssystem (LSS) die genannte path envelope nach Ausführung der Verbindungsanforderung übergibt,
d) das Koordinierungssystem (LSS) die path envelope abspeichert und bei einer späteren Verbindungsanforderung dem Switching-Control-System (PSS) mitübergibt.

8. Vermittlungssystem gemäß Anspruch 6,
**gekennzeichnet durch**,
a) eine erste Gruppe (GP4, GP5) von zentralen Steuerungsprozessoren, bei der ein zentraler Steuerungsprozessor jeweils ein transientes System gemäß Anspruch 2, ein Koordinierungssystem (LSS) und ein Switching-Control-System (PSS) umfaßt,
b) eine gemeinsame Nachrichten-Schnittstelle der transienten Moduln, die als eine Inter-Prozessor-Nachrichtenschnittstelle ausgebildet ist.

9. Vermittlungssystem gemäß Anspruch 8,
**gekennzeichnet** durch
eine zweite Gruppe (GP1, GP2, GP3) von zentralen Steuerungsprozessoren, bei der ein zentraler Steuerungsprozessor jeweils ein bestimmtes statisches Modul des statischen Systems gemäß Anspruch 4 und den bezüglich dieses statischen Moduls relevanten Teil der Datenbasis (DB) umfaßt.

## Claims

1. Call processing system for controlling connections in a switching system, having the following features:
a) a signalling interface system (ESIS) which forms the interface of the call processing system to the signalling type on which the respective connection ends are based, and carries out that part of the logic connection control which is dependent on the type of signalling,
b) a call control system (CCS) which carries out that part of the logic connection control which is independent of the type of signalling,
c) initialization of connection control processes at the physical level by corresponding connection requests to a resource control system (PSS, RHS), which connection requests are produced by the signalling interface system (ESIS) and the call control system (CCS) in a mutually independent manner,
d) a coordination system (LSS) which coordinates the mutually independent connection requests submitted to the resource control system (PSS, RHS) by the signalling interface system and the call control system.

2. Call processing system according to Claim 1,
characterized
in that the call control system (CCS) and the signalling interface system comprise a transient system having a plurality of transient modules,
a) the transient modules dynamically producing in each case one chain of entities per connection, which entities communicate with one another by means of an information interface which is common to all the transient modules,
b) an entity in each case autonomously carrying out a sub task of the logic connection control and in so doing, being able to submit corresponding autonomous connection requests to the resource control system PSS, RHS), via the coordination system (LSS).

3. Call processing system according to Claim 2,
characterized
in that
a) stimulation information which causes user actions is in each case initially received by the entities at the ends of a chain and, after carrying out a sub task corresponding to the entity, can be passed on along the chain.
b) the position of an entity in the chain is defined by the function of its transient module.

4. Call processing system according to Claim 2,
characterized
in that the call control system (CSS) additionally comprises a static system having a plurality of steady-state modules, a steady-state module receiving commands from the produced entities of a transient module and then carrying out that part of the control task of a transient module which is dependent on the structure of the data base.

5. Call processing system according to one of Claims 1 to 4,
characterized
in that the coordination system (LSS) comprises coordination modules (LSM),
a) which receive and buffer store connection requests produced for an active connection end point (VEP) involved with a connection,
b) which pass onto the resource control system (PSS, RHS) a connection request buffer stored by them when they have received control over an active connection end point (VEP),
c) which give up control over a specific active connection end point (VEP) between one another in such a manner that only one coordination module has control over this active connection end point (VEP) at a specific point in time.

6. Switching system having a call processing system according to one of Claims 1 to 5,
characterized
in that it comprises a resource control system having a switching control system (PSS) and resource systems (RHS),
a) the switching control system (PSS) controlling the connections at the physical level in a central manner and for this purpose receiving connection requests from the call processing system, while
b) the resources systems (RHS) of the switching system control the respective resources locally and for this purpose receive commands from the switching control system (PSS).

7. Switching system according to Claim 6, characterized
in that
a) the switching control system (PSS) processes, independently of one another, the connection requests received from the call processing system,
b) in the case of first connection requests, the switching control system (PSS) sets up a path envelope which includes data describing the switched path,
c) the switching control system (PSS) transfers the said path envelope to the coordination system (LSS) after carrying out the connection request,
d) the coordination system (LSS) stores the path envelope and also passes it to the switching control system (PSS) in the case of a later connection request.

8. Switching system according to Claim 6,
characterized by
a) a first group (GP4, GP5) of central control processors in which one central control processor in each case comprises a transient system according to Claim 2, a coordination system (LSS) and a switching control system (PSS),
b) a common information interface of the transient modules, which is designed as an interprocessor information interface.

9. Switching system according to Claim 8, characterized by
a second group (GP1, GP2, GP3) of central control processors, in which one central control processor in each case comprises a specific steady-state module of the static system according to Claim 4 and that part of the data base (DB) which is relevant to this steady-state module.

## Revendications

1. Système de traitement d'appels servant à commander des liaisons dans un système de commutation, ayant les caractéristiques suivantes:
a) un système (ESIS) d'interface de signalisation, qui forme l'interface du système de traitement d'appels avec le type de la signalisation à la base des côtés de liaison associés et qui effectue la partie de la commande logique de liaison qui dépend du type de signalisation,
b) un système (CCS) de contrôle d'appels qui effectue la partie de la commande logique de liaison qui ne dépend pas du type de la signalisation,
c) une initialisation d'opérations de commande de liaison sur un plan physique par des demandes de liaison correspondantes, qui sont adressées à un système (PSS, RHS) de contrôle de ressources et qui sont produites par le système (ESIS) d'interface de signalisation et par le système (CCS) de contrôle d'appel indépendamment l'un de l'autre,
d) un système (LSS) de coordination qui coordonne les demandes de liaison, qui sont faites au système (PSS, RHS) de contrôle de ressources par le système d'interface de signalisation et par le système de contrôle d'appel et qui sont indépendantes l'une de l'autre.

2. Système de traitement d'appels suivant la revendication 1,
caractérisé en ce que
le système (CCS) de contrôle d'appel et le système d'interface de signalisation comprennent un système transitoire ayant plusieurs modules transitoires,
a) les modules transitoires produisant dynamiquement par liaison une chaîne d'instances, qui communiquent entre elles par une interface de messages commune à tous les modules transitoires,
b) une instance effectuant de manière autonome une tâche partielle de la commande logique de liaison et pouvant faire, par l'intermédiaire du système (LSS) de coordination, des demandes de liaison correspondantes autonomes au système (PSS, RHS) de contrôle de ressources.

3. Système de traitement d'appels suivant la revendication 2,
caractérisé en ce que
a) des messages d'excitation, qui proviennent d'actions des utilisateurs, sont d'abord reçus par les instances situées aux extrémités d'une chaîne et peuvent ensuite, une fois réalisée une tâche partielle correspondant à l'instance, être transmis le long de la chaîne,
b) la position d'une instance dans la chaîne est fixée par la fonction de son module transitoire.

4. Système de traitement d'appels suivant la revendication 2, caractérisé en ce que le système (CCS) de contrôle d'appel comprend en outre un système statique comportant plusieurs modules statiques, un module statique recevant des instructions parmi les instances produites d'un module transitoire et effectuant alors la partie de la tâche de commande d'un module transitoire qui dépend de la structure de la base de données.

5. Système de traitement d'appels suivant l'une des revendications 1 à 4,
caractérisé en ce que
le système (LSS) de coordination comporte des modules (LSM) de coordination,
a) qui reçoivent et mettent en mémoire intermédiaire des demandes de liaison produites pour un point (VEP) d'extrémité de liaison actif qui participe à une liaison,
b) qui, s'ils ont obtenus le contrôle sur un point (VEP) d'extrémité de liaison actif, retransmettent au système (PSS, RHS) de contrôle de ressources une demande de liaison qu'ils ont mise en mémoire intermédiaire,
c) qui adjugent entre eux le contrôle sur un point (VEP) d'extrémité de liaison actif déterminé par le fait que, à un instant déterminé, toujours un seul module de coordination a le contrôle sur ce point (VEP) d'extrémité de liaison actif.

6. Système de commutation comportant un système de traitement d'appels suivant l'une des revendications 1 à 5,
caractérisé en ce que
il comprend un système de contrôle de ressources ayant un système (PSS) de contrôle de commutation et des systèmes (RHS) de ressources,
a) le système (PSS) de contrôle de commutation commandant de manière centralisée les liaisons sur un plan physique et recevant à cet effet des demandes de liaison du système de traitement d'appels,
b) les systèmes (RHS) de ressources du système de commutation commandant localement les ressources et recevant à cet effet des instructions du système (PSS) de contrôle de commutation.

7. Système de commutation suivant la revendication 6,
caractérisé en ce que
a) le système (PSS) de contrôle de commutation traite indépendamment les unes des autres les demandes de liaison reçues du système de traitement d'appels,
b) pour des premières demandes de liaison, le système (PSS) de contrôle de commutation constitue une path envelope qui contient les données décrivant le chemin connecté,
c) le système (PSS) de contrôle de commutation transmet au système (LSS) de coordination ladite path envelope, une fois la demande de liaison réalisée,
d) le système (LSS) de coordination met en mémoire la path envelope et, lors d'une demande de liaison ultérieure, la transmet au système (PSS) de contrôle de commutation de manière conjointe.

8. Système de commutation suivant la revendication 6,
caractérisé par
a) un premier groupe (GP4, GP5) de processeurs centraux de commande, dans lequel chaque processeur central de commande comporte un système transitoire suivant la revendication 2, un système (LSS) de coordination et un système (PSS) de contrôle de commutation,
b) une interface de messages commune des modules transitoires qui est réalisée sous la forme d'une interface inter-processeurs.

9. Système de commutation suivant la revendication 8,
caractérisé par
un deuxième groupe (GP1, GP2, GP3) de processeurs centraux de commande, dans lequel chaque processeur central de commande comporte un module statique. déterminé du système statique selon la revendication 4 et la partie de la base (DB) de données qui est pertinente relativement à ce module statique.
